# EUROPÄISCHE PATENTSCHRIFT

(11) **EP 3 035 040 B1**
(45) Veröffentlichungstag und Bekanntmachung des Hinweises auf die Patenterteilung: **22.11.2017**
(21) Anmeldenummer: 15003386.8
(22) Anmeldetag: 27.11.2015
(51) Int. Cl.: G01N 27/16

(54) **GASSENSOR, MESSELEMENT FÜR EINEN GASSENSOR UND VERFAHREN ZUR HERSTELLUNG EINES MESSELEMENTES**
GAS SENSOR, MEASURING ELEMENT FOR A GAS SENSOR AND METHOD FOR MANUFACTURING A MEASURING ELEMENT
CAPTEUR DE GAZ, ÉLÉMENT DE MESURE POUR UN CAPTEUR DE GAZ ET PROCÉDÉ DE FABRICATION D'UN ÉLÉMENT DE MESURE

(30) Priorität: 18.12.2014 DE 102014018681
(43) Veröffentlichungstag der Anmeldung: 22.06.2016
(73) Patentinhaber: Dräger Safety AG & Co. KGaA, 23560 Lübeck (DE)
(72) Erfinder: Dittrich, Miriam, 23626 Ratekau (DE); Stender, Erik, 23858 Reinfeld (DE); Osswald, Jürgen, 22179 Hamburg (DE)
(74) Vertreter: Kettenbeil, Roxane Henriette

(56) Entgegenhaltungen:
- DE-A1- 2 755 553
- DE-T2- 69 418 615
- GB-A- 973 250
- US-A- 2 816 863
- US-A- 4 077 775
- US-A1- 2005 220 672

## Beschreibung

Die vorliegende Erfindung betrifft einen Gassensor gemäß dem Oberbegriff von Anspruch 1, sowie ein Messelement für einen Gassensor gemäß Anspruch 9 und ein Verfahren zur Herstellung eines Messelements entsprechend Anspruch 12. Gassensoren werden typischerweise bei der Überwachung von industriellen Prozessen, bei denen brennbare Gase und Dämpfe bereits im Normalbetrieb in höheren Konzentrationen vorhanden sein können, eingesetzt. In diesem Zusammenhang sind insbesondere sogenannte Wärmetönungssensoren bei der Überwachung von explosionsgefährdeten Atmosphären weit verbreitet. Solche Wärmetönungssensoren haben üblicherweise ein Messelement, das auch Pellistor genannt wird, und können zum Beispiel in portablen Gasmessgeräten eingesetzt werden. Mit Hilfe dieser Wärmetönungssensoren kann eine direkte Bestimmung der Explosionsgefahr in einer gewissen Umgebung durchgeführt werden. Dabei werden möglicherweise in einem Umgebungsgasgemisch enthaltene, brennbare Stoffe katalytisch am Messelement umgesetzt. Dabei kommt es zu einer Oxidationsreaktion, welche in letzter Folge zu einem Wärmetönungssignal führt. Bei dieser Reaktion werden alle brennbaren Gase mehr oder weniger gleichermaßen von dem Wärmetönungssensor umgesetzt, so dass zuverlässig sowohl vor bekannten als auch vor unbekannten brennbaren Stoffen und Mischungen verschiedener brennbarer Stoffe gewarnt werden kann. Ein großer Vorteil dieser Sensoren liegt somit in der Breitbanddetektion. Weitere Vorteile sind ein geringer Energiebedarf, eine kostengünstige Bauweise und die gute Kompensation von Umwelteinflüssen. Ein Problem, das mit diesen Sensoren verbunden ist, ist jedoch die für manche Anwendungen nicht unbedingte ausreichende mechanische Robustheit der Sensoren. So besteht das Messelement (der Pellistor) üblicherweise aus einem zu einer Spule aufgewickelten Platindraht, der mit einer katalytisch aktiven oder katalytisch inaktiven Keramik beschichtet ist. Die katalytisch aktive oder inaktive Keramik bildet dabei eine sogenannte Pellistorperle, die an Kontaktstiften befestigt ist und von einem Sockel gehalten wird (vgl. dazu US 2005/0220672). An der Oberfläche einer Pellistorperle, die mit einer katalytisch aktiven Keramik beschichtet ist, findet die entsprechende katalytische Umsetzung der nachzuweisenden Gase statt. Wird der Sensor großen mechanischen Belastungen ausgesetzt, so kann das Problem auftreten, dass die Pellistorperle beschädigt wird, so dass eine zuverlässige Messung nicht mehr möglich ist.
Um dem zu begegnen, sieht beispielsweise DE 10 2005 050914 B4 eine schwingende Aufhängung eines solchen Gassensors in einem Gasmessgerät vor. Wird dieses Gasmessgerät während des Betriebes Stößen oder Stürzen ausgesetzt, so kann ein Aufprall durch die Aufhängung abgemildert werden und es kann der Gefahr der Zerstörung der Perllistorperle vorgebeugt werden. Nachteilig kann hierbei jedoch sein, dass insbesondere bei einer kleinen Bauweise des Gasmessgerätes nur wenig Bewegungsfreiraum für einen entsprechend montierten Sensor zur Verfügung steht. Zudem kann diese Bauweise einer hermetischen Abdichtung des Inneren des Gasmessgerätes entgegenstehen. In der Folge können sich Störgase aus dem Inneren des Gasmessgerätes als problematisch erweisen.
WO 2011/053866 A1 sieht in diesem Zusammenhang anstelle einer schwingenden Aufhängung des gesamten Gassensors die Stützung des Messelementes, d. h. der Pellistorperle, durch zusätzliche Stützdrähte vor. Hierbei wird zwar das Messelement gegenüber mechanischen Einwirkungen recht gut geschützt, die Konstruktion ist jedoch relativ aufwendig und es kann eine unerwünschte Wärmeabfuhr durch den zusätzlichen Stützdraht auftreten.

EP 1 151 285 B1 und DE 10 2007 032700 B4 schlagen vor, die Pellistorperle mit einem stoßdämpfenden Material zu umgeben. Auch hier wird die Perle zwar geschützt, die Zufuhr des zu analysierenden Gases zur Pellistorperle, insbesondere zur katalytisch aktiven Oberfläche der Perle, kann aber durch das Dämmmaterial behindert werden, so dass diese Sensoren gegebenenfalls nur für eine eingeschränkte Auswahl von Gasen und Umgebungen geeignet sind.

Ziel der Erfindung ist es, diese und weitere Nachteile des Standes der Technik zu überwinden und einen verbesserten Gassensor, insbesondere ein verbessertes Messelement für einen Gassensor zu schaffen. Beispielsweise ist es wünschenswert, dass der Gassensor bzw. das Messelement eine höhere mechanische Robustheit, einen geringeren Energiebedarf und dennoch eine hohe Empfindlichkeit gegenüber vielen Gasen aufweist. Der Gassensor bzw. das Messelement soll zudem einfach und kostengünstig herstellbar sein.

Zur Lösung dieser Aufgabe schlägt die Erfindung einen Gassensor entsprechend Anspruch 1, ein Messelement für einen solchen Gassensor entsprechend Anspruch 9 sowie ein Verfahren zur Herstellung eines Messelementes entsprechend Anspruch 12 vor. Ausgestaltungen sind jeweils Gegenstand der abhängigen Ansprüche.

Bei einem Gassensor mit einem Gehäuse und einem Messelement, wobei das Messelement eine Heizwendel aufweist, die mit einer katalytisch aktiven oder inaktiven Keramik beschichtet ist, sieht die Erfindung vor, dass die Keramik ein faserförmiges Material enthält.

Das Gehäuse eines solchen Gassensors dient dabei beispielsweise als Aufnahme für das Messelement. Das Gehäuse kann insofern explosionsgeschützt sein. Es ist günstig, wenn das Gehäuse wenigstens teilweise gaspermeabel ist, so dass ein zu untersuchendes Gasgemisch bis zu dem Messelement vordringen kann. In dem Gehäuse ist bevorzugt wenigstens ein Messelement angeordnet, welches mit Kontakten verbunden ist, die durch eine Kontaktdurchführung aus dem Gehäuse heraus geführt werden können. Das Messelement ist bevorzugt ein Pellistor (eine Pellistorperle). Es ist auch vorstellbar, dass mehrere Messelemente in dem Gehäuse angeordnet sind. Beispielsweise kann ein erstes Messelement, welches eine katalytisch aktive Keramik aufweist, neben einem zweiten Messelement angeordnet sein, welches eine katalytisch inaktive Keramik aufweist. An der Oberfläche des Messelementes mit der katalytisch aktiven Keramik können nachzuweisende Analyte umgesetzt werden, so dass bei deren Vorhandensein entsprechende Messsignale ausgegeben werden. Das Messelement mit der katalytisch inaktiven Keramik kann als sogenanntes Kompensations- oder Kompensatorelement dienen (die Begriffe Kompensationselement und Kompensatorelement sind hierbei synonym). Mit Hilfe eines solchen Kompensatorelementes können Schwankungen in den jeweiligen Umweltbedingungen ausgeglichen werden, die andernfalls das Messsignal beeinflussen könnten.

Man erkennt insofern, dass die Keramik dann eine katalytisch aktive Keramik sein kann, wenn an der Oberfläche des jeweiligen Messelementes eine Reaktion des Analyten gewünscht ist. Wenn es sich bei dem Messelement um ein Kompensatorelement handelt, ist es günstig, wenn die Keramik katalytisch inaktiv ist.

Die Heizwendel ist ein Heiz- und Messdraht, dessen elektrischer Widerstand sich in Abhängigkeit der Temperatur signifikant ändert. Kommt es nun zu einer katalytischen Umsetzung eines nachzuweisenden Analyten an der Oberfläche der Keramik, so kommt es durch diese Oxidationsreaktion zu einer Temperaturerhöhung am Messelement und in der Folge zur Änderung des Widerstandes der Heizwendel. Diese Widerstandsänderung kann dann entsprechend gemessen werden.

Ein großer Vorteil des erfindungsgemäßen Gassensors liegt darin, dass die Keramik des Messelementes ein faserförmiges Material enthält. Günstig ist es, wenn das faserförmige Material beständig gegenüber hohen Temperaturen ist. Auch ist es vorteilhaft, wenn das faserförmige Material mechanisch stabil ist. Besonders vorteilhaft ist es, wenn das faserförmige Material inert gegenüber Katalysatoren und Analyten ist. In einer ganz besonders bevorzugten Ausführungsvariante kann das faserförmige Material alle drei dieser Eigenschaften aufweisen, d.h. das faserförmige Material ist bevorzugt mechanisch stabil, beständig gegenüber hohen Temperaturen und inert gegenüber Katalysatoren und Analyten. Unter mechanisch stabilem faserförmigem Material werden dabei sowohl biegsame als auch steife Fasern verstanden. Es hat sich überraschenderweise gezeigt, dass durch das Einbringen von bereits geringen Mengen solchen faserförmigen Materials in die Keramik des Messelementes dessen mechanische Festigkeit deutlich verbesserbar ist, ohne jedoch die Messeigenschaften des Messelementes und mithin des Gassensors zu beeinträchtigen. Das faserförmige Material kann in einer ersten Ausführungsvariante in Form von zufällig verteilten Fasern in der Keramik enthalten sein. Denkbar ist auch, dass die Fasern ein Gitter um die Spule der Heizwendel bilden. In diesem Zusammenhang ist beispielsweise vorstellbar, dass zufällig verteilte Fasern eher biegsam sind, während Fasern, die ein Gitter um die Spule der Heizwendel bilden eher steif sind, wie auch noch aus der nachfolgenden Beschreibung von Ausführungsformen erkennbar wird.

In einer besonders bevorzugten Ausführungsform ist das faserförmige Material ausgewählt aus der Gruppe enthaltend Glasfasern, Mikro- und/oder Nanofasern oder dergleichen, bevorzugt Glasfasern, besonders bevorzugt Fasern aus Quarzglas, Borosilikat, Alkalisilikat oder dergleichen. Günstig ist es dabei in jedem Fall, wenn das faserförmige Material nicht elektrisch leitend ist. Insbesondere Glasfasern können zudem biegsam und/oder beweglich sein, was ein Vorteil bei der Herstellung des Messelementes sein kann, beispielsweise, wenn die Fasern in der Keramik zufällig verteilt vorliegen sollen. Sollen die Fasern hingegen ein Gerüst um die Heizwendel bilden, so ist es günstig, wenn möglichst steife Glasfasern als faserförmiges Material verwendet werden. Glasfasern können zudem den Vorteil bieten, dass sie auch bei Betriebstemperaturen von beispielsweise 550°C inert gegenüber verwendeten Katalysatoren und Trägermaterialien sind, die ebenfalls in der Keramik enthalten sein können. Man erkennt insofern, dass es günstig ist, wenn das faserförmige Material aus Glasfasern besteht, bevorzugt aus Glasfasern aus besonders temperaturbeständigen Materialien wie z. B. Quarzglas oder Borosilikat. Alternativ sind auch Materialien wie zum Beispiel Alkalisilikate bei Betriebstemperaturen von unter 500°C denkbar.

In jedem Fall ist es vorteilhaft, wenn die Heizwendel ein Draht aus Edelmetall oder einer Edelmetalllegierung ist; bevorzugt ein Draht, der ausgewählt ist aus der Gruppe enthaltend Platin, Palladium, Rhodium, Iridium, Rhutenium, Osmium, Wolfram, Kupfer, Silber, Nickel und dergleichen, sowie Legierungen aus diesen Elementen; besonders bevorzugt ein Draht, der ausgewählt ist aus der Gruppe enthaltend Platin, Platin-Legierungen, Rhodium-Legierungen und dergleichen. Günstig ist es dabei in jedem Fall, wenn das verwendete Material, aus dem der Draht gefertigt ist, einen hohen Temperaturkoeffizienten des elektrischen Widerstandes aufweist. Vorteilhafterweise ist dieser Koeffizient über einen großen Temperaturbereich konstant. Man erkennt insofern, dass insbesondere die Verwendung von Platin günstig ist. Insofern ist es denkbar, dass die Heizwendel ein Draht aus Platin ist. Vorstellbar ist jedoch auch, dass die Heizwendel ein Draht aus einer Platin-Legierung und/oder einer Rhodium-Legierung ist, beispielsweise eine Platin-Rhodium-Legierung. Dies kann eine höhere Festigkeit und mithin eine verbesserte mechanische Robustheit des Drahtes bieten. In der Folge kann auch das Messelement eine verbesserte mechanische Robustheit aufweisen. In jedem Fall ist es günstig, wenn der Draht einen Durchmesser von nicht mehr als 60 µm aufweist. Beispielsweise kann der Draht einen Durchmesser von etwa 10 µm bis etwa 50 µm aufweisen. Dabei sind sowohl Drähte mit einem Durchmesser von etwa 10 µm bis etwa 30 µm denkbar, als auch Drähte mit einem Durchmesser von etwa 40 µm bis 50 µm. Bevorzugt weist der Draht dabei einen Durchmesser von etwa 20 µm bis etwa 25 µm auf.

Weiterhin ist es günstig wenn die Keramik einen Katalysator enthält, bevorzugt einen Katalysator, der ausgewählt ist aus der Gruppe enthaltend Platin, Palladium, Rhodium, Iridium, Rhutenium, Oxide der vorgenannten Elemente, Gemische der vorgenannten Elemente, Gemische der Oxide der vorgenannten Elemente sowie Gemische der vorgenannten Elemente und Oxide der vorgenannten Elemente. Der Katalysator kann dann dazu dienen, eine Oxidationsreaktion an der Oberfläche der Keramik zu initiieren, wenn entsprechende brennbare Gase in einem zu untersuchenden Gasgemisch enthalten sind. Die Auswahl der geeigneten Katalysatoren ist dabei selbstverständlich nicht auf die oben genannten Katalysatoren beschränkt, sondern es sind je nach Anwendungsfall weitere Katalysatoren vorstellbar. Beispielsweise ist es denkbar, dass die Keramik ein Rhodiumoxid als Katalysator aufweist.

Besonders günstig ist es auch, wenn die Keramik einen Träger aufweist; bevorzugt einen Träger, der aus Nanopartikeln hergestellt ist, die ein Material enthalten, das ausgewählt ist aus der Gruppe enthaltend Metalloxide, Halbmetall-Oxide, Oxide der Übergangsmetalle, Kombinationen aus Metall-, Halbmetall- und/oder Übergangsmetalloxiden und/oder dergleichen; besonders bevorzugt ein Träger, der aus Nanopartikeln, die ein Material enthalten, das ausgewählt ist aus Aluminium-, Bor-, Titan-, Zirconium-, Hafnium-, Yttrium-, Cer- und Siliciumoxidien und/oder Kombinationen oder Gemischen daraus; ganz besonders bevorzugt Nanopartikel, die aus Aluminium-, Yttrium-, Cer-, Silicium- und/oder Zirconiumoxid sowie Gemischen daraus bestehen. Die Verwendung von Nanopartikeln als Träger kann große Vorteile bieten, insbesondere wenn die Keramik eine hochporöse Keramik ist. Eine solche hochporöse Keramik ist besonders dann vorteilhaft, wenn eine größtmögliche Vergrößerung der katalytisch aktiven Oberfläche des Messelementes gewünscht ist. Entsprechende brennbare Gase können dann nicht nur an der kugelförmigen äußeren Oberfläche der Pellistorperle umgesetzt werden, sondern durch die hochporöse Ausgestaltung der Keramik wird die Oberfläche derart vergrößert, dass katalytische Reaktionen auch im Inneren der Keramik möglich sind. Das zu untersuchende Gasgemisch kann dazu durch die Poren in die Keramik eindringen und innerhalb der Poren an der vorhandenen Keramikoberfläche umgesetzt werden. Die Verwendung von Nanopartikeln als Träger, bietet dabei den Vorteil, dass sich eine entsprechende Porosität bei der Herstellung des Messelementes ausbilden kann. Dies ist insbesondere der Fall, wenn Nanopartikel verwendet werden, deren Hauptbestandteile Aluminiumoxid, Cer- und/oder Zirconiumoxid sind, besonders bevorzugt wenn ein Gemisch aus Aluminiumoxid- und Zirconiumoxidpartikeln oder ein Gemisch aus Aluminiumoxid- und Ceroxidpartikeln verwendet wird.

In jedem Fall ist es auch günstig, wenn der Gewichtsanteil des faserförmigen Materials bezogen auf die Keramik wenigstens 0,1 % oder mehr, bevorzugt wenigstens 0,5 % oder mehr, besonders bevorzugt wenigstens 1 % oder mehr, ganz besonders bevorzugt wenigstens 2 % oder mehr beträgt. Bereits ab einem Gewichtsanteil von 0,3 %, insbesondere ab 0,5 % und erst recht ab 2 % zeigt sich ein deutlich stabilisierender Effekt des faserförmigen Materials auf die mechanische Robustheit der Keramik.

Dabei ist es auch günstig, wenn der Gewichtsanteil des faserförmigen Materials bezogen auf die Keramik höchstens 25 % oder weniger, bevorzugt höchstens 10 % oder weniger, besonders bevorzugt höchstens 5 % oder weniger, ganz besonders bevorzugt höchstens 3 % oder weniger beträgt. Insbesondere geringe Gewichtsanteile des faserförmigen Materials sind dabei von Vorteil, weil sich gezeigt hat, dass sie die Ausbildung der erforderlichen Porosität und der katalytisch aktiven Schicht der Keramik nicht oder nur unwesentlich beeinträchtigen. Man erkennt insofern, dass es vorteilhaft ist, wenn der Gewichtsanteil des faserförmigen Materials bezogen auf die Keramik wenigstens 0,1 % und höchstens 25 %, bevorzugt wenigstens 0,5 % und höchstens 10 %, besonders bevorzugt wenigstens 1 % und höchstens 5 %, ganz besonders bevorzugt wenigstens 2 % und höchstens 5 % beträgt. Dabei ist auch denkbar, dass der Gewichtsanteil des faserförmigen Materials bezogen auf die Keramik wenigstens 0,1 % und höchstens 10 % beträgt oder dass der Gewichtsanteil des faserförmigen Materials bezogen auf die Keramik wenigstens 0,1 % und höchstens 5 % beträgt, oder dass der Gewichtsanteil des faserförmigen Materials bezogen auf die Keramik wenigstens 0,1 % und höchstens 3 % beträgt. Vorstellbar ist auch, dass der Gewichtsanteil des faserförmigen Materials bezogen auf die Keramik wenigstens 0,5 % und höchstens 25 % beträgt, oder dass der Gewichtsanteil des faserförmigen Materials bezogen auf die Keramik wenigstens 0,5 % und höchstens 5 % beträgt, oder dass der Gewichtsanteil des faserförmigen Materials bezogen auf die Keramik wenigstens 0,5 % und höchstens 3 % beträgt. Denkbar ist auch, dass der Gewichtsanteil des faserförmigen Materials bezogen auf die Keramik wenigstens 1 % und höchsten 25 % beträgt, oder dass der Gewichtsanteil des faserförmigen Materials bezogen auf die Keramik wenigstens 1 % und höchstens 10 % beträgt, oder dass der Gewichtsanteil des faserförmigen Materials bezogen auf die Keramik wenigstens 1 % und höchstens 3 % beträgt. Denkbar ist weiterhin, dass der Gewichtsanteil des faserförmigen Materials bezogen auf die Keramik wenigstens 2 % und höchstens 25 % beträgt, oder dass der Gewichtsanteil des faserförmigen Materials bezogen auf die Keramik wenigstens 2 % und höchstens 10 % beträgt, oder dass der Gewichtsanteil des faserförmigen Materials bezogen auf die Keramik wenigstens 2 % und höchstens 5 % beträgt.

Man erkennt in jedem Fall, dass ein erfindungsgemäßer Gassensor bevorzugt ein Gehäuse mit einem Messelement aufweist, wobei das Messelement eine Heizwendel aufweist, die mit einer katalytisch aktiven oder inaktiven Keramik beschichtet ist, wobei die Keramik ein faserförmiges Material enthält und wobei die Keramik vorteilhafterweise einen Katalysator und einen Träger aufweist. Der Katalysator ist dabei bevorzugt ausgewählt aus Platin, Palladium, Rhodium, Iridium, Rhutenium sowie Oxiden der vorgenannten Elemente, besonders bevorzugt ein Rhodiumoxid. Der Träger ist bevorzugt aus Nanopartikeln hergestellt, insbesondere aus Aluminiumoxid- und Zirconiumoxidnanopartikeln. Die Heizwendel des Gassensors besteht bevorzugt aus einem Platindraht. Das faserförmige Material eines erfindungsgemäßen Gassensors ist vorteilhafterweise ein Glasfasermaterial, besonders sind es Fasern aus Quarzglas, Borosilikat, Alkalisilikat oder dergleichen. Der Gewichtsanteil der Glasfasern bezogen auf die Keramik beträgt bevorzugt wenigstens 0,1 % und höchstens 25 %, bevorzugt wenigstens 0,5 % und höchstens 10 %, besonders bevorzugt wenigstens 2 % und höchstens 5 %.

In einem weiteren Aspekt sieht die Erfindung ein Messelement für einen erfindungsgemäßen Gassensor vor. Das Messelement weist eine Heizwendel auf, die mit einer Keramik beschichtet ist. Bei diesem Messelement ist es ebenfalls vorteilhaft, wenn die Keramik ein faserförmiges Material aufweist. Die Heizwendel eines solchen Messelementes ist auch hier ein Draht aus Edelmetall oder einer Edelmetalllegierung, bevorzugt ein Draht, der ausgewählt ist aus der Gruppe enthaltend Platin, Palladium, Rhodium, Iridium, Rhutenium, Osmium, Wolfram, Kupfer, Silber, Nickel und dergleichen sowie Legierungen aus diesen Elementen, besonders bevorzugt ein Draht, der ausgewählt ist aus der Gruppe enthaltend Platin, Platin-Legierungen, Rhodium-Legierungen und dergleichen. Die Keramik ist auch hier eine katalytisch aktive oder inaktive Keramik. Es ist günstig, wenn die Keramik einen Katalysator und einen Träger aufweist, wobei der Katalysator ausgewählt ist aus der Gruppe enthaltend Platin, Palladium, Rhodium, Iridium, Rhutenium sowie Oxide der vorgenannten Elemente, und wobei der Träger aus Nanopartikeln herstellbar ist, deren Material ausgewählt ist aus der Gruppe enthaltend Metalloxide, Halbmetalloxide, Oxide der Übergangsmetalle, Kombinationen aus Metall-, Halbmetall- und/oder Übergangsmetalloxiden und/oder dergleichen. Man erkennt insofern, dass die Keramik bevorzugt eine Keramik ist wie sie oben bereits in Bezug auf den erfindungsgemäßen Gassensor beschrieben ist und dass das Messelement ein Messelement mit den oben bereits beschriebenen Merkmalen und Vorteilen sein kann.
In einem weiteren Aspekt betrifft die Erfindung ein Verfahren zur Herstellung eines Messelementes, nämlich ein Verfahren zur Herstellung eines erfindungsgemäßen Messelementes für einen erfindungsgemäßen Gassensor, wobei das Verfahren die Schritte des Anspruchs 12 aufweist. Schritt a., nämlich das Bereitstellen einer Heizwendel, sieht dabei in jedem Fall vor, dass ein entsprechender Heizwendeldraht zu einer Spule gebogen wird. Der Draht kann dabei derart geformt werden, dass er wenigstens zwei freie Enden aufweist, die bei der Montage des Messelementes mit entsprechenden Kontakten des Gassensors verbindbar sind. Der Heizwendeldraht kann weiterhin wie oben beschrieben ausgebildet sein kann. Besonders bevorzugt ist es dabei, wenn der Draht aus dem die Heizwendel (Spule) gebogen wird, ein Platindraht, ein Draht aus einer Platin-Legierung oder ein Draht aus einer Rhodium-Legierung ist. Die so hergestellte Spule ist dann dazu vorgesehen, mit der Schritt b. hergestellten Beschichtungslösung entsprechend umgossen oder beschichtet zu werden.

Das Herstellen der Beschichtungslösung gemäß Schritt b. kann auf verschiedene Weisen erfolgen. Die im Ergebnis erhaltene Beschichtungslösung weist in jedem Fall eine Katalysatorvorstufe, einen Träger sowie das gewünschte faserförmige Material auf. Diese Beschichtungslösung wird dann gemäß Schritt c. auf die Heizwendel aufgetragen und nach dem Auftragen gemäß Schritt d. getrocknet. Dabei erfolgt das Auftragen entsprechend Schritt c. in dünnen Schichten, so dass insgesamt nach mehrfachem Wiederholen der Schritte c. und d. eine hochporöse Perle aus getrocknetem Beschichtungsmaterial entsteht. Das getrocknete Beschichtungsmaterial wird dann gemäß Schritt f. kalziniert, wobei die gewünschte Keramik entsteht und die Katalysatorvorstufe zum Katalysator reagiert.

Man erkennt dass es günstig ist, wenn Schritt d. und/oder Schritt f. das Anlegen eines Heizstromes umfasst. Auf diese Weise wird die Beschichtungslösung erhitzt, was das Trocknen bzw. Kalzinieren entsprechend Schritt d. beziehungsweise Schritt f. unterstützt.

In einer ersten Ausführungsvariante des Verfahrens ist vorgesehen, dass Schritt b. die weiteren Schritte aufweist:
b.1 Herstellen einer Trägerrohmasse
b.2 Zugeben des faserförmigen Materials zu der Rohmasse
b.3 Optionales Aufsuspendieren der aus Schritt b2. erhaltenen Mischung aus Trägerrohmasse und faserförmigen Material.

Das Herstellen einer Trägerrohmasse entsprechend Schritt b.1 kann dabei beispielsweise erfolgen, indem zunächst eine Katalysatorvorstufe in einem Lösungsmittel gelöst wird, etwa destilliertem Wasser oder dergleichen. Das Lösen kann dabei unter Rühren und/oder Erwärmen erfolgen. Die dabei erhaltene Lösung wird im Anschluss mit einer Mischung aus Trägermaterial versetzt und in einem nächsten Schritt aufsuspendiert, beispielsweise im Ultraschallbad. Andere Vorgehensweisen sind selbstverständlich auch denkbar.

Gemäß Schritt b.2 kann dann das faserförmige Material zu der auf diese Weise erhaltenen Lösung zugegeben werden. Für eine optimale Durchmischung, kann dann die Trägerrohmasse, welche das faserförmige Material enthält, nochmals aufsuspendiert werden, bevor sie auf die Heizwendel aufgetragen wird.

In noch einer weiteren Ausführungsvariante kann vorgesehen sein, dass Schritt a. die weiteren Schritte aufweist:
a.1 Bereitstellen einer Heizwendel
a.2 Einbetten der Heizwendel in ein Gerüst aus faserförmigem Material.

Das Bereitstellen der Heizwendel entsprechend Schritt a.1 entspricht dabei dem oben bereits allgemein beschriebenen Schritt a., d.h. es wird ein entsprechender Heizwendeldraht zu einer Spule mit wenigstens zwei Enden gebogen. Diese Spule wird dann gemäß Schritt a.2 in ein Gerüst aus faserförmigen Material eingebettet, bevor die so hergestellte Heizwendel samt Gerüst mit einer Beschichtungslösung entsprechend den Schritten b. und c. beschichtet wird. Die Beschichtungslösung, die in diesem Fall zur Beschichtung der Heizwendel verwendet wird, weist einen Träger und eine Katalysatorvorstufe auf. Das faserförmige Material ist in diesem Fall bereits um die Heizwendel herum angeordnet. Es ist auch vorstellbar, dass sowohl ein Gerüst aus faserförmigem Material mit einer Beschichtungslösung beschichtet wird, die zusätzlich faserförmiges Material aufweist.

Man erkennt in jedem Fall, dass ein erfindungsgemäßes Verfahren ein Verfahren zur Herstellung eines Messelementes ist, wobei das Messelement für einen Gassensor vorgesehen ist, und wobei das Messelement eine Heizwendel aufweist, die mit einer Keramik beschichtet ist, wobei die Keramik ein faserförmiges Material aufweist.

Weitere Merkmale, Einzelheiten und Vorteile der Erfindung ergeben sich aus dem Wortlaut der Ansprüche, sowie aus der folgenden Beschreibung von Ausführungsbeispielen und Zeichnungen. Es zeigen:
- Fig. 1: eine schematische Darstellung eines erfindungsgemäßen Gassensors mit einem erfindungsgemäßen Messelement.
- Fig. 2a bis 2d: Ergebnisse von Fallexperimenten, die mit verschiedenen Messelementen entsprechend den nachfolgend beschriebenen Beispielen 1 bis 4 durchgeführt wurden, wobei Figur 2a ein Messelement entsprechend dem Stand der Technik gemäß Beispiel 1 zeigt, Figur 2b ein erfindungsgemäßes Messelement gemäß Beispiel 2, Figur 2c ein Messelement entsprechend dem Stand der Technik gemäß Beispiel 3 und Figur 2d ein erfindungsgemäßes Messelement gemäß Beispiel 4;
- Fig. 2e: eine Übersicht über messtechnische Untersuchungen und Veränderungen der Nullpunktspannung nach mechanischer Beeinträchtigung von Messelementen entsprechend den Beispielen 1 bis 4;

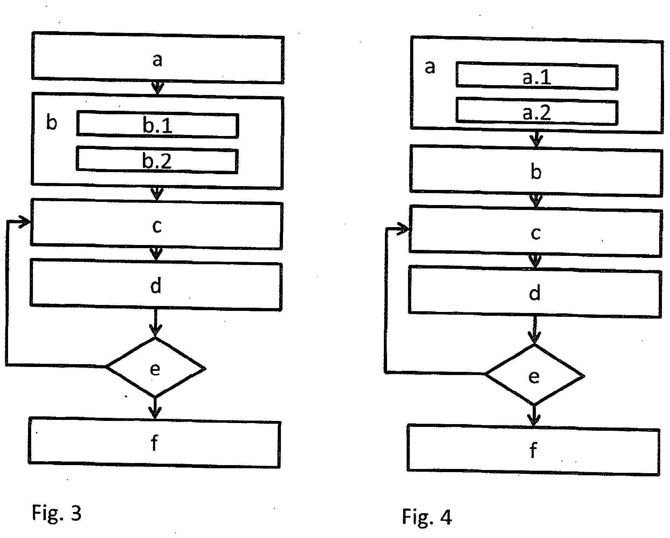

- Fig. 3: eine schematische Darstellung eines erfindungsgemäßen Verfahrens zur Herstellung eines erfindungsgemäßen Messelementes;
- Fig. 4: eine schematische Darstellung eines alternativen Verfahrens zur Herstellung eines erfindungsgemäßen Messelementes.

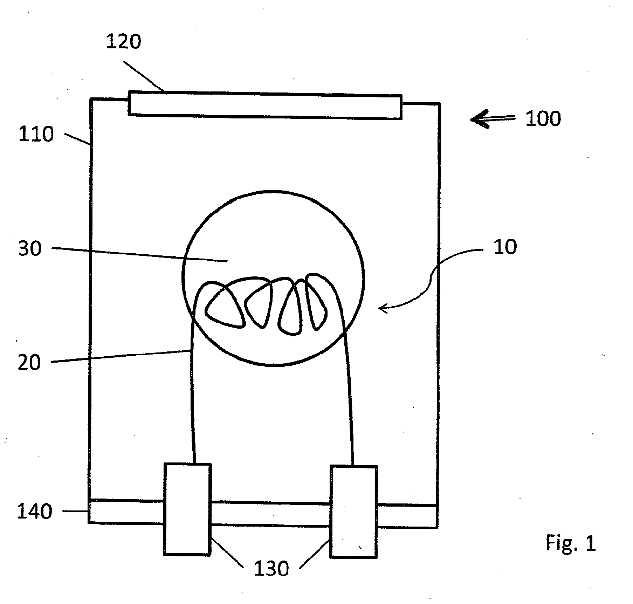

Der in Fig. 1 dargestellte erfindungsgemäße Gassensor 100 hat ein Gehäuse 110 mit einem Gaseinlass 120 sowie ein in dem Gehäuse 110 angeordnetes Messelement 10. Der Gaseinlass 120 ist mit einer gaspermeablen Membran abgedichtet. In einer Ausführungsvariante ist der Gaseinlass 120 druckdicht, explosionsgeschützt verschlossen.

Das Messelement 10 weist eine Heizwendel 20 auf. Die Heizwendel 20 ist zu einer Spule gebogen. Die Spule ist von einer Keramik 30 umgeben. Die Keramik 30 hat dabei die Form einer Perle. Heizwendel 20 und Keramik 30 bilden gemeinsam ein Pellistorelement, nämlich das Messelement 10. Die Heizwendel 20 hat dabei zwei Drahtenden, die jeweils mit Kontakten 130 des Gassensors 100 verbunden sind. Die Kontakte 130 werden durch eine Durchführung 140 an die Außenseite des Gehäuses 110 geführt. Auf diese Weise ist es möglich, eine elektrisch leitende Verbindung zwischen dem Messelement 10 und beispielsweise einem Gasmessgerät, in welches der Gassensor 100 einsetzbar ist, herzustellen.

Die Keramik 30 besteht aus einem Gemisch aus Träger, Katalysator und faserförmigem Material. Verschiedene Beispiele für die Zusammensetzung einer solchen Keramik 30 sind den nachfolgend beschriebenen Beispielen 1 bis 4 zu entnehmen.

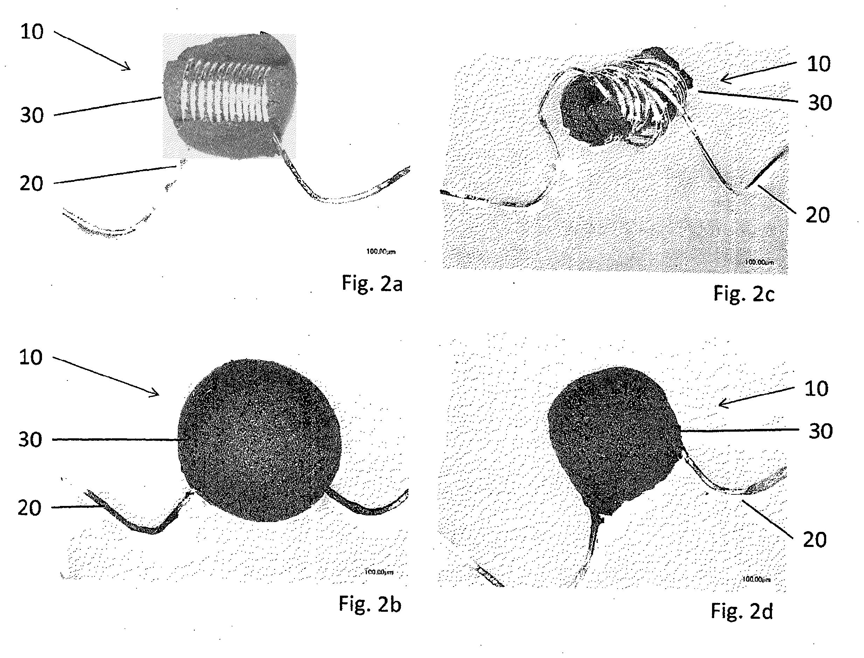

In den Fig. 2a bis 2d sind verschiedene Ergebnisse von Fallexperimenten, die mit Messelementen entsprechend dem Stand der Technik sowie erfindungsgemäßen Messelementen durchgeführt wurden. Dabei entsprechen die in Fig. 2a und Fig. 2c dargestellten Messelemente, d. h. die den nachfolgend beschriebenen Beispielen 1 und 3 entsprechenden Messelemente, dem Stand der Technik. Die in Fig. 2b und 2d dargestellten - d.h. die entsprechend Beispiel 2 beziehungsweise Beispiel 4 hergestellten - Messelemente sind erfindungsgemäße Messelemente.

### Beispiel 1

Zur Herstellung eines Messelementes 10, wie es in Fig. 2a erkennbar ist, werden 2 g Tris(ethylendiamin)Rhodium(III)trichlorid Hydrat (Alfa Aesar, 10553) in 10 ml destilliertem Wasser unter Rühren bei ca. 50°C gelöst. Anschließend werden zu 1 ml der erhaltenen Lösung 200 mg Aluminiumoxid (BDH Chemicals, 33138 2S) und 100 mg Zirconiumdioxid (Sigma Aldrich, 544760) hinzugegeben und in einem Ultraschallbad für 10 Minuten aufsuspendiert. Die Suspension wird anschließend schrittweise auf eine Platinspule (Durchmesser 25 µm Heraeus), die die Heizwendel 20 bildet, aufgetragen. Nach jedem Auftragungsschritt folgt durch Einstellen eines Heizstromes von 70 mA durch den Platindraht ein Trocknungschritt. Nach dem letzten Beschichtungs- und Trocknungsvorgang wird durch das Einstellen des Betriebsstroms von 115 mA die in den vorangehenden Schritten erhaltene Perle kalziniert. Dabei wird das Rhodiumsalz, welches als Katalysatorvorstufe in der Beschichtungslösung enthalten ist, in Rhodiumoxid überführt.

### Beispiel 2:

Zur Herstellung eines erfindungsgemäßen Messelementes 10 mit einer entsprechenden Keramik 30, werden Glasfasern als faserförmiges Material bereitgestellt. Dabei können kommerziell erhältliche Glasfasern eingesetzt werden oder die Glasfasern werden aus Glasfaservlies wie folgt herstellt: 0,5 g Glasfaservlies (Munktell, MK360) werden kleingeschnitten und in 50 ml destilliertes Wasser gegeben. Die Glasfasern werden dann für 24 Stunden leicht gerührt, so dass sie aufquellen können. Die aufgequollene Glasfaservliesmasse, in der die Glasfasern ungeordnet und frei vorliegen, wird dann bei 60°C für etwa 6 Stunden getrocknet.

Wie bereits für Beispiel 1 beschrieben, wird dann eine Suspension aus 1 ml Tris(ethylendiamin)Rhodium(III)trichlorid Lösung, der Alumiumoxid und Zirconiumoxid entsprechend zugesetzt wurden, hergestellt und mit 2 mg der getrockneten Glasfasern versetzt. Die so hergestellte Beschichtungslösung wird für 10 Minuten im Ultraschallbad behandelt. Danach wird die Suspension wie ebenfalls für Beispiel 1 beschrieben, auf eine Platinspule aufgetragen und auf diese Weise eine Pellistorperle erhalten. Auch hier erfolgt nach jedem Auftragungsschritt das Einstellen eines Heizstromes zum Trocknen und nach dem letzten Beschichtungs- und Trocknungsvorgang das Einstellen eines entsprechenden Betriebsstromes zum Kalzinieren der Detektorperle, entsprechend Beispiel 1.

Die entsprechend Beispiel 2 enthaltenen Messelemente 10, weisen eine Keramik 30 auf, die ungefähr 0,5 Gew.-% Glasfaseranteil bezogen auf die Keramik aufweist.

### Beispiel 3:

Zur Herstellung eines alternativen, ebenfalls dem Stand der Technik entsprechenden Messelementes 10, werden wiederum 2 g Tris(ethylendiamin)Rhodium(III)trichlorid Hydrat (Alfa Aesar, 10553) in 10 ml destilliertem Wasser unter Rühren bei ca. 50°C gelöst. Anschließend werden zu 1 ml der erhaltenen Lösung 200 mg Aluminiumoxid (BDH Chemicals 33138 2S) 75 mg Cerdioxid (Sigma Aldrich, 544841) hinzugegeben und in einem Ultraschallbad für 10 Minuten aufsuspendiert. Die weitere Vorgehensweise erfolgt auch hier wie bereits für Beispiel 1 beschrieben.

### Beispiel 4:

Zur Herstellung eines alternativen erfindungsgemäßen Messelementes 10 entsprechend dem in Fig. 2d dargestellten Beispiel, werden wiederum zunächst Glasfasern als faserförmiges Material bereitgestellt. Dazu werden 0,5 g Glasfaservlies (Whatman, GF/D) in 50 ml destilliertes Wasser gegeben und 24 Stunden leicht gerührt. Die aufgequollene Glasfaservliesmasse, in der die Glasfasern anschließend ungeordnet und frei vorliegen, wird dann bei 60°C für 6 Stunden getrocknet.

Es wird dann wie für Beispiel 3 bereits beschrieben, eine Suspension aus Rhodiumsalzlösung, Aluminiumoxid und Cerdioxid hergestellt. Zu 1 ml dieser Suspension werden 10 mg der getrockneten Glasfasern hinzugegeben. Die Mischung wird für 10 Minuten im Ultraschallbad behandelt. Die weitere Vorgehensweise erfolgt entsprechend dem oben für Beispiel 3 bzw. Beispiel 1 beschriebenen Vorgehen.

Es werden Messelemente 10 deren Keramik 30 einen Gewichtsanteil von ungefähr 2,6 % Glasfasern bezogen auf die Keramik aufweist, erhalten.

Man erkennt insofern, dass sowohl das Messelement 10 entsprechend dem Ausführungsbeispiel in Figur 1a als auch die Messelemente 10 entsprechend den Fig. 2b und 2d jeweils ein Messelement 10 darstellen, das eine Heizwendel 20 aufweist, die mit einer Keramik 30 beschichtet ist, wobei die Keramik 30 ein faserförmiges Material aufweist. Das faserförmige Material ist dabei ausgewählt aus der Gruppe enthaltend Glasfasern, Mikro- und/oder Nanofasern oder dergleichen, nämlich Glasfasern, insbesondere Quarzglas, Borosilikat, Alkalisilikat oder dergleichen. Die Heizwendel 20 ist ein Draht aus Edelmetall oder einer Edelmetalllegierung, bevorzugt ein Draht, der ausgewählt ist aus der Gruppe enthaltend Platin, Palladium, Rhodium, Iridium, Rhutenium, Osmium, Wolfram, Kupfer, Silber, Nickel und dergleichen, sowie Legierungen aus diesen Elementen, nämlich Platin oder eine Platin-Rhodium-Legierung, insbesondere Platin. Die Keramik 30 enthält einen Katalysator, nämlich einen Katalysator der ausgewählt ist aus der Gruppe enthaltend Platin, Palladium, Rhodium, Iridium, Rhutenium sowie Oxiden der vorgenannten Elemente, nämlich Rhodiumoxid. Die Keramik 30 weist außerdem einen Träger auf, bevorzugt einen Träger, der aus Nanopartikeln hergestellt ist, deren Material ausgewählt ist aus der Gruppe enthaltend Metalloxide, Halbmetalloxide, Oxide der Übergangsmetalle, Kombinationen aus Metall, Halbmetall und/oder Übergangsmetalloxiden und/oder dergleichen, nämlich besonders Nanopartikel, die aus Alumiumoxid, Zirconiumoxid oder Cerdioxid bestehen, beziehungsweise Kombinationen aus Aluminiumoxid und Zirconiumoxid bzw. Aluminiumoxid und Ceroxid.

Der Gewichtsanteil des faserförmigen Materials bezogen auf die Keramik beträgt wenigstens 0,1 % und höchstens 25 %, nämlich wenigstens 0,5 % und höchstens 5 %.

Man erkennt weiter, dass das entsprechend Fig. 2b und Fig. 2d bzw. Fig. 1 dargestellte Messelement 10 nach einem Verfahren hergestellt ist, dass die Schritte aufweist:
a. Bereitstellen einer Heizwendel 20
b. Herstellen einer Beschichtungslösung
c. Auftragen der Beschichtungslösung
d. Trocknen
e. Wiederholen der Schritte c. und d. bis eine Perle 30 entstanden ist
f. Kalzinieren der Perle 30.

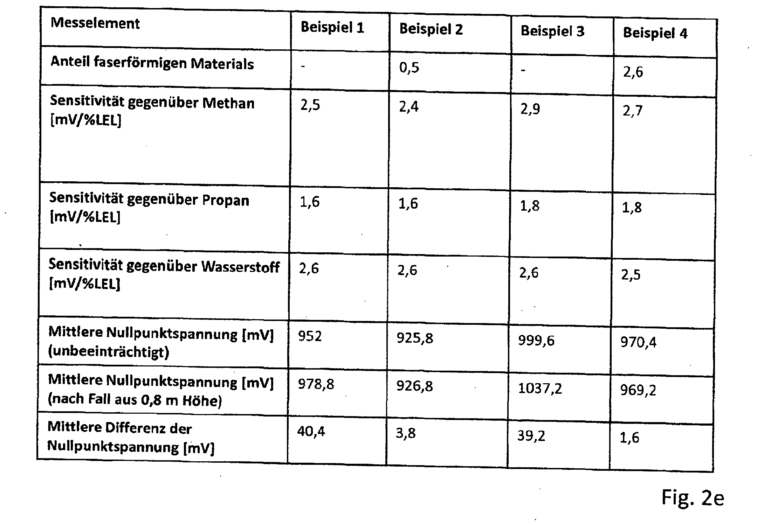

Die Schritte d. bzw. f. des Verfahrens umfassen dabei das Anlegen eines Heizstromes. Weiterhin umfasst Schritt b. dieses Verfahrens die Schritte:
b1. Herstellen einer Trägerrohmasse
b2. Zugeben des faserförmigen Materials zu der Rohmasse und
b3. Aufsuspendieren, der aus Schritt b2. erhaltenen Mischung aus Trägerrohmasse und faserförmigen Material.
Die entsprechend den Beispielen 1, 2, 3 und 4 hergestellten Messelemente 10 wurden im Anschluss an ihre Herstellung sowohl auf Empfindlichkeit gegenüber brennbaren Gasen als auch auf Robustheit gegenüber mechanischen Beeinträchtigungen untersucht. Man erkennt entsprechend in Fig. 2e, dass zwischen den erfindungsmäßen Messelementen 10 gemäß Beispiel 2 und Beispiel 4 und Messelementen 10, die dem Stand der Technik entsprechen gemäß Beispiel 1 und Beispiel 3 kein signifikanter Abfall der Sensitivität gegenüber Methan, Propan oder Wasserstoff festzustellen ist. So weist ein Messelement entsprechend Beispiel 1 eine Sensitivität gegenüber Methan von 2,5 mV/%LEL, gegenüber Propan von 1,6 mV/%LEL und gegenüber Wasserstoff von 2,6 mV/%LEL auf. Ein mit einem Anteil von 0,5 Gewichtsprozent faserförmigem Material versetzt es Messelement 10 entsprechend Beispiel 2 weist eine Sensitivität gegenüber Methan von 2,4 mV/%LEL, gegenüber Propan von 1,6 mV/%LEL und gegenüber Wasserstoff von 2,6 mV/%LEL auf. Das Versetzen der Keramik 30 mit Glasfasern entsprechend den oben dargestellten Beispielen hat insofern keinen Einfluss auf die gewünschte Sensitivität der Messelemente 10. Gleiches erkennt man auch bei den Beispielen 3 und Beispiel 4. Das Messelement 10 entsprechend Beispiel 3 weist - wie man in Fig. 2 erkennt - gegenüber Methan eine Sensitivität von 2,5 mV/%LEL gegenüber Propan von 1,8 mV/%LEL und gegenüber Wasserstoff von 2,5 mV/%LEL auf. Das entsprechend vergleichbare Messelement 10 gemäß Beispiel 4, welches einen Anteil von faserförmigen Material von 2,6 % aufweist, zeigt eine Sensitivität gegenüber Methan von 2,7 mV/%LEL, gegenüber Propan von 1,8 mV/%LEL und gegenüber Wasserstoff von 2,5 mV/%LEL.

Bei den genannten Messwerten handelt es sich jeweils um Mittelwerte von jeweils sechs Messelementen 10 eines entsprechenden Beispiels.

Um die mechanische Robustheit der Messelemente 10 zu bestimmen, wurden Falltests der Messelemente 10 durchgeführt. Hierfür wurden die Messelemente 10 in einen Metallträger adaptiert und in einem Fallrohr aus 0,80 m Höhe auf eine Stahlplatte fallengelassen.

Vor und nach dem Falltest wurde die sogenannte Nullpunktspannung bestimmt. Die Nullpunktspannung ist der Spannungsabfall der Messelemente 10, wenn sie mit einem Betriebsstrom von 110 mA in Luft betrieben werden. Auch hier wurden jeweils wieder sechs Messelemente 10 für jedes Beispiel 1 bis 4 untersucht, wie der nachfolgenden Tabelle 1 entnommen werden kann.

**Tabelle 1**

| Messelement entsprechen | Nullpunktspannung [mV] vor Falltest | Nullpunktspannung [mV] nach Fall aus 0,8 m Höhe | Differenz [mV] vor und nach dem Falltest |
|---|---|---|---|
| Beispiel 1 | 952 | 1011 | 59 |
| | 943 | 966 | 23 |
| | 956 | 968 | 12 |
| | 949 | 915 | -34 |
| | 960 | 1034 | 74 |
| Beispiel 2 | 910 | 910 | 0 |
| | 935 | 941 | 6 |
| | 904 | 900 | -4 |
| | 933 | 930 | -3 |
| | 947 | 953 | 6 |
| Beispiel 3 | 981 | 1025 | 44 |
| | 1001 | 997 | -4 |
| | 1027 | 1091 | 64 |
| | 991 | 1057 | 66 |
| | 998 | 1016 | 18 |
| Beispiel 4 | 974 | 971 | -3 |
| | 959 | 958 | -1 |
| | 992 | 992 | 0 |
| | 941 | 942 | 1 |
| | 986 | 983 | -3 |

In Fig. 2e erkennt man für jedes Beispiel entsprechend dem oben darstellten Beispiel 1 bis 4 jeweils die mittlere Nullpunktspannung in mV vor dem Falltest (mittlere Nullpunktspannung [mV] (unbeeinträchtigt)), sowie die mittlere Nullpunktspannung nach einem Fall aus 0,8 m Höhe (mittlere Nullpunktspannung [mV] (nach Fall aus 0,8 m Höhe)) sowie die mittlere Differenz zwischen der Nullpunktspannung vor und nach dem Falltest (mittlere Differenz der Nullpunktspannung [mV]). Bei Messelementen 10, die entsprechend Beispiel 1 herstellt sind, beträgt die mittlere Nullpunktspannung vor dem Falltest 952 mV und nach dem Fall aus 0,8 m Höhe 978,8 mV. Es ist mithin eine mittlere Differenz von 40,4 mV festzustellen. Auch bei Messelementen 10, die entsprechend Beispiel 3 hergestellt sind, ist eine entsprechend hohe mittlere Differenz feststellbar. So beträgt die mittlere Nullpunktspannung vor dem Falltest bei diesen Messelementen 10 999,6 mV und nach dem Falltest 1.037,2 mV. Die mittlere Differenz der Nullpunktspannung bei Messelementen 10 entsprechend Beispiel 3 beträgt mithin 39,2 mV. Erfindungsgemäße Messelemente 10 entsprechend Beispiel 2 und Beispiel 4 weisen hingegen eine deutlich verringerte Differenz der Nullpunktspannung auf. So beträgt bei Messeelementen 10 entsprechend Beispiel 2 die mittlere Nullpunktspannung vor dem Falltest 925,8 mV und nach dem Falltest 926,8 mV. Die mittlere Differenz der Nullpunktspannung beträgt dabei 3,8 mV. Bei Messelemente 10, die entsprechend Beispiel 4 hergestellt wurden, ist die mittlere Differenz sogar noch geringer. So beträgt die mittlere Nullpunktspannung vor dem Falltest 970,4 mV und nach dem Falltest 969,2 mV. Die mittlere Differenz der Nullpunktspannung beträgt bei diesen Messelementen 10 1,6 mV. Man erkennt insofern in Fig. 2, dass die mechanische Robustheit der Messelemente 10, die faserförmiges Material in ihrer Keramik 10 aufweisen, deutlich verbessert ist. Gleichzeitig bleibt die gewünschte Sensitivität gegenüber brennbaren Gasen erhalten.

Die Erfindung ist nicht auf eine der vorbeschrieben Ausführungsformen beschränkt, sondern in vielfältiger Weise abwandelbar.

Sämtliche aus den Ansprüchen, der Beschreibung und den Zeichnungen hervorgehenden Merkmale und Vorteile, einschließlich konstruktiver Einzelheiten, räumliche Anordnung und Verfahrensschritten, können sowohl für sich als auch in den verschiedensten Kombinationen erfindungswesentlich sein.

### Bezugszeichenliste

- a: Bereitstellen der Heizwendel
- a.1: Bereitstellen der Heizwendel
- a.2: Einbetten der Heizwendel
- b: Herstellen der Beschichtungslösung
- b.1: Herstellen der Träger-Rohmasse
- b.2: Zugeben des faserförmigen Materials
- c: Auftragen der Beschichtungslösung
- d: Trocknen
- e: Wiederholung
- f: Kalzinieren

- 10: Messelement
- 20: Heizwendel
- 30: Keramik

- 100: Gassensor
- 110: Gehäuse
- 120: Gaseinlass
- 130: Kontakt
- 140: Durchführung

## Patentansprüche

1. Gassensor (100) mit einem Gehäuse (110) und einem Messelement (10), wobei das Messelement (10) eine Heizwendel (20) aufweist, die mit einer katalytisch aktiven oder inaktiven Keramik (30) beschichtet ist, **dadurch gekennzeichnet, dass** die Keramik (30) ein faserförmiges Material enthält.

2. Gassensor nach Anspruch 1, **dadurch gekennzeichnet, dass** das faserförmige Material ausgewählt ist aus der Gruppe enthaltend Glasfasern, Mikro- und/oder Nanofasern, bevorzugt Glasfasern, besonders bevorzugt Fasern aus Quarzglas, Borosilikat oder Alkalisilikat.

3. Gassensor nach einem der vorhergehenden Ansprüche, **dadurch gekennzeichnet, dass** die Heizwendel (20) ein Draht aus Edelmetall oder einer Edelmetall-Legierung ist;
bevorzugt ein Draht, der ausgewählt ist aus der Gruppe enthaltend Platin, Palladium, Rhodium, Iridium, Rhutenium, Osmium, Wolfram, Kupfer, Silber und Nickel, sowie Legierungen aus diesen Elementen;
besonders bevorzugt ein Draht, der ausgewählt ist aus der Gruppe enthaltend Platin, Platin-Legierungen und Rhodium-Legierungen.

4. Gassensor nach einem der vorhergehenden Ansprüche, **dadurch gekennzeichnet, dass** die Keramik (30) einen Katalysator enthält;
bevorzugt einen Katalysator, der ausgewählt ist aus der Gruppe enthaltend Platin, Palladium, Rhodium, Iridium, Rhutenium, Oxide der vorgenannten Elemente, Gemische der vorgenannten Elemente, Gemische der Oxide der vorgenannten Elemente sowie Gemische der vorgenannten Elemente und Oxide der vorgenannten Elemente.

5. Gassensor nach einem der vorhergehenden Ansprüche, **dadurch gekennzeichnet, dass** die Keramik (30) einen Träger aufweist;
bevorzugt einen Träger, der aus Nanopartikeln hergestellt ist, die ein Material enthalten, das ausgewählt ist aus der Gruppe enthaltend Metalloxide, Halbmetall-Oxide, Oxide der Übergangsmetalle, Kombinationen aus Metall-, Halbmetall- und/oder Übergangsmetall-Oxiden, besonders bevorzugt aus Nanopartikel, die ein Material enthalten, das ausgewählt ist aus Alumium-, Bor-, Titan-, Zirconium-, Hafnium-, Yttrium-, Cer- und Siliciumoxidien und/oder Kombinationen oder Gemischen daraus;
ganz besonders bevorzugt Nanopartikel aus Aluminium-, Yttrium-, Cer-, Silicium- und/oder Zirconiumoxid sowie Gemische daraus.

6. Gassensor nach einem der vorhergehenden Ansprüche, **dadurch gekennzeichnet, dass** der Gewichtsanteil des faserförmigen Materials bezogen auf die Keramik wenigstens 0,1 % oder mehr, bevorzugt wenigstens 0,5 % oder mehr, besonders bevorzugt wenigstens 1 % oder mehr, ganz besonders bevorzugt wenigstens 2 % oder mehr beträgt.

7. Gassensor nach einem der vorhergehenden Ansprüche, **dadurch gekennzeichnet, dass** der Gewichtsanteil des faserförmigen Materials bezogen auf die Keramik höchstens 25 % oder weniger, bevorzugt höchstens 10 % oder weniger, besonders bevorzugt höchstens 5 % oder weniger, ganz besonders bevorzugt höchstens 3 % oder weniger beträgt.

8. Gassensor nach einem der vorhergehenden Ansprüche, **dadurch gekennzeichnet, dass** der Gewichtsanteil des faserförmigen Materials bezogen auf die Keramik wenigstens 0,1 % und höchstens 25 %, bevorzugt wenigstens 0,5 % und höchstens 10%, besonders bevorzugt wenigstens 1 % und höchstens 5 %, ganz besonders bevorzugt wenigstens 2 % und höchstens 5 % beträgt.

9. Messelement (10) für einen Gassensor (100) entsprechend einem der vorhergehenden Ansprüche, wobei das Messelement eine Heizwendel (20) aufweist, die mit einer Keramik (30) beschichtet ist, **dadurch gekennzeichnet, dass** die Keramik (30) ein faserförmiges Material aufweist.

10. Messelement nach Anspruch 9, **dadurch gekennzeichnet, dass** die Heizwendel (20) ein Draht aus Edelmetall oder einer Edelmetall-Legierung ist;
bevorzugt ein Draht, der ausgewählt ist aus der Gruppe enthaltend Platin, Palladium, Rhodium, Iridium, Rhutenium, Osmium, Wolfram, Kupfer, Silber, Nickel, sowie Legierungen aus
diesen Elementen,
besonders bevorzugt ein Draht, der ausgewählt ist aus der Gruppe enthaltend Platin, Platin-Legierungen, Rhodium-Legierungen.

11. Messelement nach einem der Ansprüche 9 oder 10, **dadurch gekennzeichnet, dass** die Keramik (10) einen Katalysator und einen Träger aufweist,
wobei der Katalysator ausgewählt ist aus der Gruppe enthaltend Platin, Palladium, Rhodium, Iridium, Rhutenium sowie Oxide der vorgenannten Elemente
und wobei der Träger aus Nanopartikeln herstellbar ist, deren Material ausgewählt ist aus der Gruppe enthaltend Metalloxide, Halbmetall-Oxide, Oxide der Übergangsmetalle, Kombinationen aus Metall-, Halbmetall- und/oder Übergansmetall-Oxiden.

12. Verfahren zur Herstellung eines Messelementes (10) entsprechend einem der Ansprüche 9 bis 11 für einen Gassensor (100) entsprechend einem der Ansprüche 1 bis 8, wobei das Verfahren die Schritte aufweist:
a. Bereitstellen einer Heizwendel (20),
b. Herstellen einer Beschichtungslösung, die eine Katalysatorvorstufe, einen Träger sowie ein faserförmiges Material aufweist,
c. Auftragen der Beschichtungslösung auf die Heizwendel,
d. Trocknen und optional kalzinieren,
e. Wiederholen der Schritte c. und d. bis eine Perle (30) entstanden ist,
f. Kalzinieren der Perle (30).

13. Verfahren nach Anspruch 12, **dadurch gekennzeichnet, dass** Schritt d. und/oder Schritt f. das Anlegen eines Heizstromes umfasst.

14. Verfahren nach einem der Ansprüche 12 bis 14, **dadurch gekennzeichnet, dass** Schritt b. die weiteren Schritte aufweist:
b.1 Herstellen einer Träger-Rohmasse,
b.2 Zugeben des faserförmiges Material zu der Rohmasse,
b.3 optional aufsuspendieren, der aus Schritt b.2 erhaltenen Mischung aus Träger-Rohmasse und faserförmigem Material.

15. Verfahren nach einem der Ansprüche 12 bis 14, **dadurch gekennzeichnet, dass** Schritt a. die weiteren Schritte aufweist
a.1 Bereitstellen einer Heizwendel (20),
a.2 Einbetten der Heizwendel (20) in ein Gerüst aus faserförmigem Material.

## Claims

1. A gas sensor (100) having a housing (110) and a measuring element (10), wherein the measuring element (10) has a heating coil (20) that is coated with a catalytically active or inactive ceramic material (30), **characterised in that** the ceramic material (30) contains a fibrous material.

2. A gas sensor according to claim 1, **characterised in that** the fibrous material is selected from the group containing glass fibres, microfibres and/or nanofibres, preferably glass fibres, particularly preferably fibres made from quartz glass, borosilicate or alkali silicate.

3. A gas sensor according to one of the preceding claims, **characterised in that** the heating coil (20) is a wire made from noble metal or a noble-metal alloy;
preferably a wire that is selected from the group containing platinum, palladium, rhodium, iridium, ruthenium, osmium, tungsten, copper, silver and nickel, and also alloys of these elements;
particularly preferably a wire selected from the group containing platinum, platinum alloys and rhodium alloys.

4. A gas sensor according to one of the preceding claims, **characterised in that the** ceramic material (30) contains a catalyst;
preferably a catalyst that is selected from the group containing platinum, palladium, rhodium, iridium, ruthenium, oxides of the afore-mentioned elements, mixtures of the afore-mentioned elements, mixtures of the oxides of the afore-mentioned elements and also mixtures of the afore-mentioned elements and oxides of the afore-mentioned elements.

5. A gas sensor according to one of the preceding claims, **characterised in that** the ceramic material (30) has a carrier:
preferably a carrier that is produced from nanoparticles that contain a material selected from the group containing metal oxides, semi-metal oxides, oxides of the transition metals,
combinations of metal oxides, semi-metal oxides and/or transition metal oxides,
particularly preferably from nanoparticles that contain a material selected from aluminium oxides, boron oxides, titanium oxides, zirconium oxides, hafnium oxides, yttrium oxides, cerium oxides and silicon oxides and/or combinations or mixtures thereof;
especially preferably nanoparticles of aluminium oxide, yttrium oxide, cerium oxide, silicon oxide and/or zirconium oxide and also mixtures thereof.

6. A gas sensor according to one of the preceding claims, **characterised in that** the proportion by weight of the fibrous material relative to the ceramic material amounts to at least 0.1 % or more, preferably at least 0.5 % or more, particularly preferably at least 1 % or more, especially preferably at least 2 % or more.

7. A gas sensor according to one of the preceding claims, **characterised in that** the proportion by weight of the fibrous material relative to the ceramic material amounts to at most 25 % or less, preferably at most 10 % or less, particularly preferably at most 5 % or less, especially preferably at most 3 % or less.

8. A gas sensor according to one of the preceding claims, **characterised in that** the proportion by weight of the fibrous material relative to the ceramic material amounts to at least 0.1 % and at most 25 %, preferably at least 0.5 % and at most 10 %, particularly preferably at least 1 % and at most 5 %, especially preferably at least 2 % and at most 5 %.

9. A measuring element (10) for a gas sensor (100) corresponding to one of the preceding claims, wherein the measuring element has a heating coil (20) that is coated with a ceramic material (30), **characterised in that** the ceramic material (30) has a fibrous material.

10. A measuring element according to claim 9, **characterised in that** the heating coil (20) is a wire made from noble metal or a noble-metal alloy;
preferably a wire that is selected from the group containing platinum, palladium, rhodium, iridium, ruthenium, osmium, tungsten, copper, silver, nickel, and also alloys of these elements;
particularly preferably a wire selected from the group containing platinum, platinum alloys, rhodium alloys.

11. A measuring element according to one of claims 9 or 10, **characterised in that the** ceramic material (10) has a catalyst and a carrier,
wherein the catalyst is selected from the group containing platinum, palladium, rhodium, iridium, ruthenium and also oxides of the afore-mentioned elements,
and wherein the carrier can be produced from nanoparticles, the material of which is selected from the group containing metal oxides, semi-metal oxides, oxides of the transition metals, combinations of metal oxides, semi-metal oxides and/or transition metal oxides.

12. A method for producing a measuring element (10) corresponding to one of claims 9 to 11 for a gas sensor (100) corresponding to one of claims 1 to 8, wherein the method has the steps:
a. provision of a heating coil (20),
b. production of a coating solution that has a catalyst precursor, a carrier and also a fibrous material,
c. application of the coating solution to the heating coil,
d. drying and optional calcination,
e. repetition of steps c. and d. until a bead (30) has developed,
f. calcination of the bead (30).

13. A method according to claim 12, **characterised in that** step d. and/or step f. includes application of a heating current.

14. A method according to one of claims 12 to 14, **characterised in that** step b. has the further steps:
b.1 production of a raw carrier mass,
b.2 addition of the fibrous material to the raw mass,
b.3 optional suspension of the mix of raw carrier mass and fibrous material obtained from step b.2.

15. A method according to one of claims 12 to 14, **characterised in that** step a. has the further steps:
a.1 provision of a heating coil (20),
a.2 embedding of the heating coil (20) into a framework of fibrous material.

## Revendications

1. Capteur de gaz (100) comprenant un boîtier (110) et un élément de mesure (10), l'élément de mesure (10) comprenant un enroulement chauffant (20), qui est revêtu avec une céramique catalytiquement active ou inactive (30), **caractérisé en ce que** la céramique (30) contient un matériau fibreux.

2. Capteur de gaz selon la revendication 1, **caractérisé en ce que** le matériau fibreux est choisi dans le groupe contenant les fibres de verre, les micro- et/ou nanofibres, de préférence les fibres de verre, de manière particulièrement préféré les fibres en verre quartzeux, en borosilicate ou en silicate alcalin.

3. Capteur de gaz selon l'une quelconque des revendications précédentes, **caractérisé en ce que** l'enroulement chauffant (20) est un fil en un métal noble ou en un alliage d'un métal noble ;
de préférence un fil qui est choisi dans le groupe contenant le platine, le palladium, le rhodium, l'iridium, le ruthénium, l'osmium, le tungstène, le cuivre, l'argent et le nickel, ainsi que les alliages de ces éléments,
de manière particulièrement préférée un fil qui est choisi dans le groupe contenant le platine, les alliages de platine et les alliages de rhodium.

4. Capteur de gaz selon l'une quelconque des revendications précédentes, **caractérisé en ce que** la céramique (30) contient un catalyseur ;
de préférence un catalyseur qui est choisi dans le groupe contenant le platine, le palladium, le rhodium, l'iridium, le ruthénium, les oxydes des éléments susmentionnés, les mélanges des éléments susmentionnés, les mélanges des oxydes des éléments susmentionnés, ainsi que les mélanges des éléments susmentionnés et des oxydes des éléments susmentionnés.

5. Capteur de gaz selon l'une quelconque des revendications précédentes, **caractérisé en ce que** la céramique (30) comprend un support ;
de préférence un support qui est fabriqué à partir de nanoparticules, qui contiennent un matériau qui est choisi dans le groupe contenant les oxydes de métaux, les oxydes de semi-métaux, les oxydes de métaux de transition, les combinaisons d'oxydes de métaux, de semi-métaux et/ou de métaux de transition,
de manière particulièrement préférée à partir de nanoparticules qui contiennent un matériau qui est choisi parmi les oxydes d'aluminium, de bore, de titane, de zirconium, d'hafnium, d'yttrium, de cérium et de silicium et/ou leurs combinaisons ou mélanges ;
de manière tout particulièrement préférée à partir de nanoparticules en oxyde d'aluminium, d'yttrium, de cérium, de silicium et/ou de zirconium, ainsi que leurs mélanges.

6. Capteur de gaz selon l'une quelconque des revendications précédentes, **caractérisé en ce que** la proportion en poids du matériau fibreux par rapport à la céramique est d'au moins 0,1 % ou plus, de préférence d'au moins 0,5 % ou plus, de manière particulièrement préférée d'au moins 1 % ou plus, de manière tout particulièrement préférée d'au moins 2 % ou plus.

7. Capteur de gaz selon l'une quelconque des revendications précédentes, **caractérisé en ce que** la proportion en poids du matériau fibreux par rapport à la céramique est d'au plus 25 % ou moins, de préférence d'au plus 10 % ou moins, de manière particulièrement préférée d'au plus 5 % ou moins, de manière tout particulièrement préférée d'au plus 3 % ou moins.

8. Capteur de gaz selon l'une quelconque des revendications précédentes, **caractérisé en ce que** la proportion en poids du matériau fibreux par rapport à la céramique est d'au moins 0,1 % et d'au plus 25 %, de préférence d'au moins 0,5 % et d'au plus 10 %, de manière particulièrement préférée d'au moins 1 % et d'au plus 5 %, de manière tout particulièrement préférée d'au moins 2 % et d'au plus 5 %.

9. Élément de mesure (10) pour un capteur de gaz (100) selon l'une quelconque des revendications précédentes, l'élément de mesure comprenant un enroulement chauffant (20) qui est revêtu avec une céramique (30), **caractérisé en ce que** la céramique (30) comprend un matériau fibreux.

10. Élément de mesure selon la revendication 9, **caractérisé en ce que** l'enroulement chauffant (20) est un fil en un métal noble ou en un alliage d'un métal noble ;
de préférence un fil qui est choisi dans le groupe contenant le platine, le palladium, le rhodium, l'iridium, le ruthénium, l'osmium, le tungstène, le cuivre, l'argent et le nickel, ainsi que les alliages de ces éléments,
de manière particulièrement préférée un fil qui est choisi dans le groupe contenant le platine, les alliages de platine et les alliages de rhodium.

11. Élément de mesure selon l'une quelconque des revendications 9 ou 10, **caractérisé en ce que** la céramique (10) comprend un catalyseur et un support,
le catalyseur étant choisi dans le groupe contenant le platine, le palladium, le rhodium, l'iridium, le ruthénium, ainsi que les oxydes des éléments susmentionnés,
et le support pouvant être fabriqué à partir de nanoparticules, dont le matériau est choisi dans le groupe contenant les oxydes de métaux, les oxydes de semi-métaux, les oxydes de métaux de transition, les combinaisons d'oxydes de métaux, de semi-métaux et/ou de métaux de transition.

12. Procédé de fabrication d'un élément de mesure (10) selon l'une quelconque des revendications 9 à 11 pour un capteur de gaz (100) selon l'une quelconque des revendications 1 à 8, le procédé comprenant les étapes suivantes :
a. la préparation d'un enroulement chauffant (20),
b. la fabrication d'une solution de revêtement qui comprend un précurseur de catalyseur, un support et un matériau fibreux,
c. l'application de la solution de revêtement sur l'enroulement chauffant,
d. le séchage et éventuellement la calcination,
e. la répétition des étapes c. et d. jusqu'à la formation d'une perle (30),
f. la calcination de la perle (30).

13. Procédé selon la revendication 12, **caractérisé en ce que** l'étape d. et/ou l'étape f. comprennent l'application d'un courant de chaleur.

14. Procédé selon l'une quelconque des revendications 12 à 14, **caractérisé en ce que** l'étape b. comprend les étapes supplémentaires suivantes : -
b.1 la fabrication d'une masse brute de support,
b.2 l'ajout du matériau fibreux à la masse brute,
b.3 éventuellement la suspension du mélange obtenu à l'étape b.2 de la masse brute de support et du matériau fibreux.

15. Procédé selon l'une quelconque des revendications 12 à 14, **caractérisé en ce que** l'étape a. comprend les étapes supplémentaires suivantes :
a.1 la préparation d'un enroulement chauffant (20),
a.2 l'incorporation de l'enroulement chauffant (20) dans un squelette de matériau fibreux.
